# EUROPEAN PATENT APPLICATION

(11) **EP 2 017 705 A1**
(43) Date of publication of application: **21.01.2009**
(21) Application number: 08290601.7
(22) Date of filing: 24.06.2008
(51) Int. Cl.: G06F 3/043

(54) **Touch control system and method of localising an excitation**

(30) Priority: 09.07.2007 EP 07290856
(71) Applicant: Sensitive Object, 92100 Boulogne Billancourt (FR)
(72) Inventor: Linote, Jean-Michel, 75013 Paris (FR); Chaine, Sébastien, 94240 l'Hay-les-Roses (FR); Jean, Grégoire, 75014 Paris (FR)
(74) Representative: Grünecker, Kinkeldey, Stockmair & Schwanhäusser Anwaltssozietät

(57) **Abstract**

The invention relates to a touch control system comprising an interaction means between a user and a system, at least two transforming means for transforming an excitation of the interaction means into respective signals and a signal processing means configured to determine the position on the interaction means where the excitation occurred. To simplify such a system, the invention uses a signal processing means, which is configured such that signatures are determined based on a comparison of at least one parameter of the respective signals. The invention also relates to a touch control system, wherein the transformation means are positioned within a housing with limber sidewalls. The invention also relates to a corresponding method.

## Description

The invention relates to a touch control system and a method for localising an excitation of an interaction means between a user and a touch control system.

Such systems are known and can be based on various technologies, like e.g. capacitive, resistive, pressure sensing or surface acoustic touch control systems. These systems find their application in a variety of products, such as touch screens of vending machines or the interface of PDAs. They all have in common that, in order to obtain a precise localisation of the position where an excitation occurred on the interaction means, serving as interface with the user, precise sensor technology and/or analysing algorithms are necessary. As a consequence, the known systems are relatively expensive.

WO 03 041 006 discloses such a system using a plurality of strain gauges to sense touch pressure on a touch layer. To be able to identify the exact position of the touch pressure, a linear equation system modelling the pressure at a touch point as a summation of the pressure values measured at the different strain gauges is established and solved numerically. This device relies on the absolute values measured on the different strain gauges and thus needs a precise strain gauge and calibration in combination with high computing power.

US 2004/0133366 discloses another contact sensitive device. This device comprises a member capable of supporting bending waves and sensors are mounted at each corner of the member to measure bending wave signals. To reduce the impact of reflections on the signals, an absorber is placed in contact with the edges of the members. Phase angles for each measured bending wave signal are calculated and a phase difference between the phase angles of at least two pairs of sensors is determined so that at least two phase differences are calculated. Therefrom a location of the contact can be determined. The system and the method described are limited to a special class of materials, namely members capable of supporting bending waves. This kind of contact sensitive device thus lacks flexibility.

US 5,241,308 discloses a force sensitive touch panel, comprising a rectangular panel with a degree of elasticity, panel supporting means and force sensing means are directly mount on the panel. From the forces measured, the position of impact is determined. This force sensitive touch panel is also limited to a certain class of materials, namely elastic ones. As in the above described case, it is the deformation of the interaction plate that is used to determine the location of an impact.

In addition, it can be observed that for such touch control systems, the response of the system with respect to a given excitation is not always satisfactory, which results in problems concerning stability and reliability of the system.

Starting therefrom, it is the first object of the present invention to provide a touch control system and corresponding method for localising an excitation of an interaction means which provides a simplified touch control system and method and remains flexible with respect to the used materials.

It is the second object to provide a touch control system with an improved responsiveness, thus allowing the touch control system to be more reliable.

The first object is achieved with the touch control system according to claim 1 and which comprises an interaction means between a user and the system, at least two transforming means for transforming a mechanical excitation, in particular a pressure excitation, of the interaction means into respective signals, and a signal processing means configured to determine a signature based on a comparison of at least one parameter of the respective signals, wherein the signature characterizes the position on the interaction means where the excitation occurred.

In contrast to prior art systems, the identification of the position on the interaction means where the excitation occurred is not based on absolute values of the signals received from the transforming means and which are compared with predetermined values, typically previously determined during a calibration run, but is based on the surprising finding that all the necessary information to identify the position of an excitation can be obtained by comparing at least one parameter of the respective signals amongst each other. As the localisation of the excitation is extracted from a comparison of measured signals and not absolute signal values, there is no need for complicated calibration procedures or calibrated or precise transforming means like necessary in the prior art devices, which base their analysis on absolute values.

In this context, an excitation is an intentional mechanical excitation including but not limited to a touch with a part of the body, and which can be static, dynamic and/or moving excitations, created by the user on the interaction means. The interaction means provides a surface at which the interaction between the user and the system can occur. A signature is a set of the compared at least one parameter suitable to determine the position of the excitation.

Preferably, the parameter of the respective signals used in the comparison to determine a signature can be the sign of the amplitude or the sign of the amplitude ratio between two signals. Actually, the transforming means then distinguish between pressure and suction. Using this parameter, a simple but reliable determination of signatures to determine the location of an impact is achieved.

Preferably the signal processing means can be configured to determine the signature based on relative properties of the at least one parameter of the respective signals, in particular, their amplitude ratios and/or the sign of the amplitude ratio and/or time duration and/or their frequency spectra. Especially for these relative properties of the signals, a stable determination of the signatures is obtained so that the touch control system according to the invention keeps its functionality to reliably determine the position of an excitation for a long time. In particular, the sign of the amplitude ratio is advantageous, as in this case one is independent of the material properties of the interaction plate. Thus a sub-module comprising the interaction means and the signal processing means can be combined with any kind of interaction means. Thus, a system can be provided which is very flexible.

The second object of the invention is achieved with a touch control system comprising an interaction means between a user and the system, and at least two transforming means for transforming a mechanical excitation, in particular a pressure excitation, of the interaction means into respective signals, such transforming means being incorporated in at least one housing with limber sidewalls. The use of at least one housing with limber sidewalls can be combined with the above-described invention. In this configuration the housing can furthermore comprise a lower panel over which the transforming means are arranged.

Typically, the transforming means is in direct contact with the interaction means and it was surprisingly discovered that, by providing a housing around the transducers, wherein the housing has limber sidewalls, in particular limber gaskets, an improved response with respect to a given excitation on the transformation means can be observed leading to a more precise device compared to the housing used in the prior art without limber sidewalls. Thus the system can work more reliably.

Advantageously, at least one, in particular each, of the transforming means can comprise a transducer, in particular, a strain gauge, more in particular, a piezoelectric transducer. The transducer transforms the physical information, e.g. pressure variations, shockwaves, and strain variations generated by the excitation, into an electrical signal, which can then be analysed. As piezoelectric transducers, ceramic or PVDF film type transducer can be used. This kind of transforming means has the desired ability to generate the electrical signal in response to the excitation, thus, the applied mechanical stress and this independently of the material of the interaction means.

Using strain gauges, the touch control system uses pressure variations to detect an excitation. The signal can be positive or negative in amplitude corresponding to compression or suction at the corresponding position of the transducer.

Advantageously, at least one transforming means can be arranged on the side of the interaction means being opposite to the side of the interaction means being arranged towards a user. This has the advantage that the user only sees the interaction means and the device can be kept small.

Preferably, the interaction means can comprise a plurality of active areas and the signal processing means can be configured to trigger a predetermined action upon excitation of the corresponding active area based on the identification of a corresponding signature by the signal processing means. Due to the use of the determined signatures, the identification of the position, namely the active area, is stable in time. Thus, the touch control system can reliably trigger the actions. In addition, the signatures remain essentially independent of variations in the setup of the touch control system. Thus, for different uses and applications, the same kind of analysis, simply being based on the relative properties of the signatures, can be exploited. Preferably, the transforming means can be arranged such that unambiguous signatures are obtained, in particular based on one parameter of the respective signals only. Thus, depending on the number of active areas and available transforming means, an optimized positioning can keep the number of different parameters one has to look at to arrive at an unambiguous signature low.

In this context, an action is an event triggered following the identification of an interaction between the user and the system. An action could, for example, be the switching of a machine.

Preferably, the touch control system can comprise fewer transforming means than active areas. The fewer transforming means required, the cheaper the touch control system can be realised. It has just to be ensured that the number of transforming means is sufficient to unambiguously detect the position at which an excitation occurs. The number of transforming means can be kept low by comparing more than one parameter of the signals. As will be explained in more detail further down, it is, for example, sufficient for a five active area touch control system to employ only three transducers as, by analysing the sign of the amplitude ratio and the absolute signal amplitude ratio, an unambiguous identification of the position of the excitation is achievable.

According to a preferred embodiment, at least one, in particular all, of the transforming means can be arranged away from the active areas. The active areas serving as a kind of buttons have the advantage that interaction-indicating means, like for example LEDs, can be positioned under the active area to indicate to the user that the touch control system has recognised an excitation applied by the user at the corresponding active area. This is, in particular, useful for transparent or semi transparent interaction means.

According to a preferred embodiment, the signal processing means can be further configured to determine a first signature corresponding to a first contact with the interaction means at a first instant and to determine a second signature corresponding to a lift-off from the interaction means at a second instant based on characteristic differences in first contact and lift-off signals. Thus, instead of attributing only one action with the typical excitation of touching and removing e.g. of a finger from an active area, the touch control system according to the invention identifies two interactions and can thus trigger two actions.

Preferably, the signal processing means can be further configured to determine the duration from the first to the second instant and to trigger different actions as a function of the duration. This makes the use of the touch control system more flexible by keeping the number of active areas low.

According to an advantageous variant, the signal processing means can be further configured to trigger different actions at the first and second instant, in particular, as a function of the position of the first contact and the position of the lift-off. This renders the response of the touch control system with respect to a given excitation even more flexible as, not only for the first and second instant two different actions can be triggered, but also the identification of the lift-off at another position can be used to trigger a different action. With the lift-off excitation having its own detectable signature, it is in fact independent of the signature of the first contact excitation.

Advantageously, the signal processing means can be further configured to analyse the signature as a function of time and to identify the trajectory of the excitation on the interaction means, in particular, in a one or two dimensional coordinate system based on characteristic differences in the signals depending on the direction of the trajectory relative to the at least two transforming means. It is thus possible to detect the sliding of a finger or any other actuator on the surface of the interaction means. Such a touch control system again renders the use of the touch control system more flexible. It can, for example, find its application as a mouse control of a computer or in any other kind of variator, such as light or temperature control, or machine control systems, such as the control of the height of a tool.

According to a variant, the signal processing means can be furthermore configured to trigger a plurality of respective actions in case that an excitation of a plurality of corresponding active areas occurs essentially at the same time, wherein the triggering is based on comparing the determined signature with the superposition of predetermined signatures. Thus, multi-touch applications, being excitations occurring at several positions at the same time, can also be dealt with by the touch control system by providing a sufficient number of predetermined and referenced signatures which can be stored in a storage unit of the touch control system.

Preferably, the interaction means can be a rigid or soft panel out of at least one of leather, latex, silicon, plastic, glass, metal or wood. Thus, compared to e.g. capacitive technologies, it becomes possible to work with any kind of material. The material can be transparent or opaque. It is a particular advantage that one kind of sub module comprising the at least two transforming means and the signal processing means can be combined with any kind of interaction means. This renders the touch control system, according to this invention, very flexible with respect to the intended applications.

The invention also relates to an apparatus comprising a touch control system as described above. Such an apparatus will take advantage from the improvements and advantages provided by the touch control system.

The object of the invention is also achieved with a touch control system according to claim 13 and which comprises an interaction means between a user and the system, at least two transforming means, in particular comprising a transducer, preferably a strain gauge or a piezoelectric transducer, for transforming an mechanical excitation, in particular a pressure excitation, of the interaction means into respective signals, wherein the at least two transforming means and the interaction means are arranged such that, upon mechanical excitation, a relative movement between the at least two transforming means and the interaction means is observable. As a relative movement between all transforming means and the interaction means is observable, it becomes possible to determine the signature of a mechanical excitation independently of the material properties.

The object of the invention is also achieved with the method according to claim 15. Like for the touch control system, the method for localising an excitation on an interaction means between a user and a touch control system takes advantage of the fact that no absolute signals need to be analysed, but that the identification of the position on the interaction occurs by a comparison of at least one parameter of the signals. This leads to a localisation which is stable in time and which does not require precise and calibrated interaction means.

Advantageously, the signature can be determined based on relative properties of the at least one parameter of the respective signals, in particular, the amplitude ratios and/or the signal of the amplitude ratios and/or the time duration and/or the frequency spectra. In particular, these parameters and their relative behaviour with respect to each other provide a stable analysis of the position at which the interaction occurs.

Advantageously, the method can further comprise the step c) of triggering an action upon identification of a predetermined signature. Due to the stability of localising the excitation on the interaction means, the method can thus be used to reliably trigger actions like the switching of machines or vending machines.

According to a preferred embodiment, the interaction means can comprise a plurality of active areas with a corresponding signature and action being attributed to each one of the active areas, such that, upon excitation of one active area, the corresponding action is triggered following the determination of the corresponding signature. Due to the use of the determined signatures, a reliable identification of the position, namely the active area, is achieved, which, in addition, is also stable in time. Thus, the touch control system can reliably trigger the actions. Furthermore, the signatures remain essentially independent of variations in the set-up of the touch control system. Thus, for different uses and applications, the same kind of analysis, simply being based on the relative properties of the signatures, can be exploited.

Preferably, the method can comprise determining a first signature corresponding to a first contact with the interaction means at the first instant and determining a second signature corresponding to a lift-off from the interaction means at the second instant based on characteristic differences in first contact and lift-off signals. Thus, instead of attributing only one action with the typical excitation of touching and removing e.g. of a finger from an active area, the method according to the invention is capable of identifying two interactions and can thus trigger two actions.

According to a preferred embodiment, the method can further comprise determining the duration from the first to the second instant and trigger in different actions as a function of the duration. Thus the method is even more flexible and the total number of active areas can be kept low.

Advantageously, this method can further comprise triggering different actions at the first and second moment, in particular, as a function of the position on the first contact and the lift-off. Thus, not only for the first and second instant two different actions can be triggered by the inventive method, but the identification of the lift-off at another position can also be used to trigger a different action.

Preferably, the method can further comprise analysing the signature as a function of time and identifying the trajectory of the excitation on the interaction means, in particular, in a one or two dimensional coordinate system, based on characteristic differences in the thickness depending on the direction of the trajectory relative to the at least two transforming means. With the inventive method, it is thus possible to detect the sliding of a finger or any other actuator on the surface of the interaction means. This method can find its application as a mouse control of a computer or in any other kind of variator, such as light or temperature control, or machine control systems, such as the control of the height of a tool.

According to a variant, the method can further comprise the step of triggering a plurality of respective actions in case that an excitation of the plurality of corresponding active areas occurs essentially at the same time, wherein the triggering is based on comparing the determined signature with the super position on predetermined signatures. Thus, multi-touch applications, being excitations occurring at several positions at the same time, can also be dealt with by the inventive method by providing a sufficient number of predetermined and referenced signatures which can be stored in a storage unit of the touch control system.

According to a preferred embodiment, the method can further comprise a step d) of discriminating an excitation from noise based on the number of peaks in the signals over a predetermined time interval. An intentional excitation has less pressure variations over time, so that an analysis of the peak frequency allows an effective removal of unwanted noisy signals.

Advantageously, the method can further comprise a step e) of discriminating an excitation from an external excitation based on the decay of the signal after the maximum pressure amplitude. Unwanted excitations are characterized by a slower signal decay, therefore an effective discrimination between intentional and unintentional excitations can be achieved.

The invention also relates to a computer program product comprising one or more computer readable media having computer executable instructions for performing the steps of the method according to one of the claims 15 - 22.

Specific embodiments of the present invention will become more apparent from the present description with reference to the accompanying drawings, wherein
- Figure 1A: illustrates a first embodiment of the invention, namely, a touch control system comprising three transforming means viewed from above and Figure 1B, a side view along the intersection line AA,
- Figure 2: is a block diagram illustrating the functioning of the touch control system of Figures 1A and 1B,
- Figure 3: is a block diagram illustrating an embodiment of the inventive method,
- Figures 4A - 4C: illustrate three typical signals, namely, an impact on an active surface of the touch control system, an external impact and ambient noise, obtained from two different transforming means,
- Figure 5: is a block diagram illustrating the algorithm to filter out impacts on the active surface, and
- Figures 6A to 6C: illustrate typical signatures for first contact and lift-off excitations and a sliding excitation,
- Figure 7: illustrates a second embodiment of a touch control system according to the invention and
- Figures 8a to 8c: illustrate a third embodiment of a touch control system according to the invention.

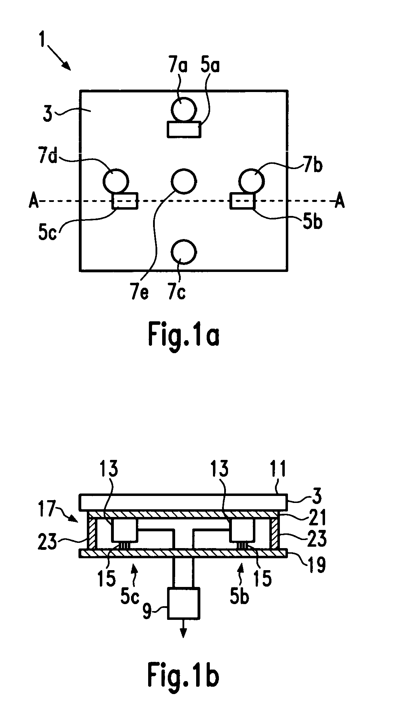

Figure 1A illustrates a first embodiment of the invention. The touch control system 1 is viewed from above. It comprises an interaction means 3, three transforming means 5a, 5b and 5c, five active areas 7a, 7b, 7c, 7d and 7e, and, as can be seen in Figure 1B, a signal processing means 9, linked to the transforming means 5a, 5b, 5c.

The interaction means 3 is a transparent or semi-transparent panel, as in this embodiment, but could also be an opaque panel. It can be made of any suitable material, such as leather, latex, silicon, plastic, glass, metal or wood. It provides a surface for allowing an interaction between a user and the system 1. Instead of using a plane panel, the invention covers any shape, in particular any kind of curved surface.

As can be seen in Figure 1B, which is a side view of the touch control system 1 along the line AA, the transforming means 5b and 5c, just like transforming means 5a, are arranged on one side of the interaction means 3 and, in particular, on the side of the interaction means 3 which is opposite to the surface 11 of the interaction means 3 being arranged towards a user (not shown). In this embodiment three interaction means are used, however, this number shall not be limiting and, as long as at least two transforming means are part of the touch control system 1, the advantageous effects of the invention can be achieved.

The transforming means 5a, 5b and 5c are sensors, each comprising a transducer 13 mounted on a support 15 inside a housing 17. The housing 17 is composed of a lower panel 19 and an upper panel 21 in contact with the interaction means 3, eventually the transducer 13 could also be in direct contact with the interaction means 3, thus without upper panel 21. The housing 17 comprises timber sidewalls 23, in particular, limber gaskets. In this embodiment, the transducer is a strain gauge in the form of a piezoelectric transducer such as a ceramic or PVDF (polyvinylidene difluoride) film. Nevertheless, other configurations concerning the transforming means 5a, 5b, 5c are possible and, thus, the invention is not limited to the use of strain gauges like the piezoelectric transducers. For example, piezo-ceramic sensors can also be used and, in general, any kind of pressure or force sensors. The transducers can be either passive sensors or power supplied. The limber sidewalls 23 have a higher elasticity than the support 15.

The transducers 13, in this case PVDF films, are strain gauges which can detect pressure on the interaction means 3. PVDF, as a ferroelectric polymer, exhibits sufficient piezoelectric properties, i.e. has the ability to generate a voltage in response to an applied mechanical stress. To do so, PVDF films are bent so as to maximise the strain on them when a pressure on the active panel occurs. They are bonded, e.g. by double-sided adhesive tape, glue or a mechanical fixation onto the support 15 and the upper panel 21 of the transforming means 17.

According to one inventive aspect according to claim 4, a housing with limber sidewalls 23, such as a limber gasket, is used. This is advantageous as, besides their functionality to support the upper panel 21 of the housing 17, their flexibility enables to amplify the physical response of the transforming means 5a, 5b, 5c, meaning that, for a given excitation on the interaction means 3, a better response with limber gaskets will be achieved compared to a case where rigid sidewalls are used. In this context, an excitation is an intentional mechanical excitation, in particular a pressure excitation, including but not limited to a touch with a part of the body, or a tool, and include but are not limited to static, dynamic or moving excitations, created by the user on the interaction means 3 of the system 1. In this embodiment one housing incorporates all transforming means. According to variants, more than one housing could be provided, each one only incorporating a part or one of the transforming means.

Limber gaskets, are preferably disposed on the four sides of the system 1. In case there are only two transforming means, it is possible to have gaskets only on two sides, which correspond to the position of the two transforming means. In the case of a system 1 with four transforming means or more, where at least one transforming means is disposed along one particular side of the system 1, best results are achieved in the case where gaskets are disposed on each side of the system 1.

Best results are achieved for gaskets that are limber and not rigid. Nevertheless they can be compressed up to 90%.

The signal processing means 9 is configured such that, upon excitation of the interaction means 3 on one of the active areas 7a, 7b, 7c, 7d, 7e, an action is triggered according to the action attributed to the active area where the excitation occurred. It is important to mention that, according to the invention, it is possible to have less transforming means 5a, 5b, 5c than active areas 7a, 7b, 7c, 7d, 7e and that, just like for the transforming means, the interaction means 3 can comprise more or less active areas depending on the application and the use of the touch control system 1.

As can be seen from Figure 1A, the transforming means 5a, 5b, 5c are arranged away from the position of the active areas 7a, 7b, 7c, 7d, 7e. This has the advantage that other elements, such as LEDs (not shown), could be placed under the active areas 7a, 7b, 7c, 7d, 7e to provide the user of the touch control system 1 with the information whether the system 1 has indeed detected the excitation applied by the user at the corresponding active area 7a, 7b, 7c, 7d, 7e or not. In Figure 1B, the interaction means 3 is illustrated as a single layer. This is a simplified illustration only as it is also possible to have a multilayer structure as an interaction means 3. For example, in the case of a glass layer, additional layers might be provided serving as anti-reflection or anti-mirroring films, etc.

The principle of the second aspect of the invention according to claim 1, actually consists in acquiring signals from the transforming means 5a, 5b, 5c due to an excitation occurring on the interaction means 3 and then interpreting the obtained signals by the signal processing means 9 in order to detect if an active area 7a, 7b, 7c, 7d, 7e on the interaction means 3 has been activated and in triggering a respective action. In this context, an action is any event triggered as a consequence of an interaction that occurred between a user and the system. One example of such an action could be to switch on or off a device following an excitation of an active area.

According to the invention, the detection of whether an active area has been activated by an excitation is based on the comparison of the signals received from the transforming means 5a, 5b, 5c by the signal processing means 9. Suitable and stable parameters for such an analysis are the amplitude ratios and/or the sign of the amplitude ratio and/or the time duration and/or the frequency spectra of the signals and/or the time of flight of the various peaks of the signals compared to one another. This analysis is carried out by the signal processing means 9. A set of these relative parameters then builds up a signature, which characterises the position on the interaction means 3 where a corresponding excitation occurred.

Thus, it is the principle of the invention to base the detection of the position where an excitation occurred on relative properties of the signals, which provides numerous advantages. As, at any time, relative properties are analysed, there is no need for calibrated or very precise transducers. Thus, low cost transducers can be used and, furthermore, due to the absence of a comparison with predetermined signals for each transforming means, less computing power is needed. Furthermore, the exploitation of relative properties of the signals also makes obsolete a calibration for each touch control system. According to another aspect of the invention, the use of limber sidewalls improves the response of the transformation means with respect to the excitations.

In contrast to the prior art devices, here the transforming means 5a, 5b and 5c are provided upon a lower panel 19, thus it becomes possible to detect or observe a change in the position of the interaction means 3 with respect to the transforming means 5a, 5b and 5c. Actually, the position of the transforming means stays stable (on rigid support 15 and lower panel 19), whereas the interaction plate can move (compression and extension of the limber sidewalls) resulting in compression and suction signals sensed by the transforming means. This relative movement with respect to all transforming means makes it possible to determine the location of impact independently of the material properties of the interaction plate 13.

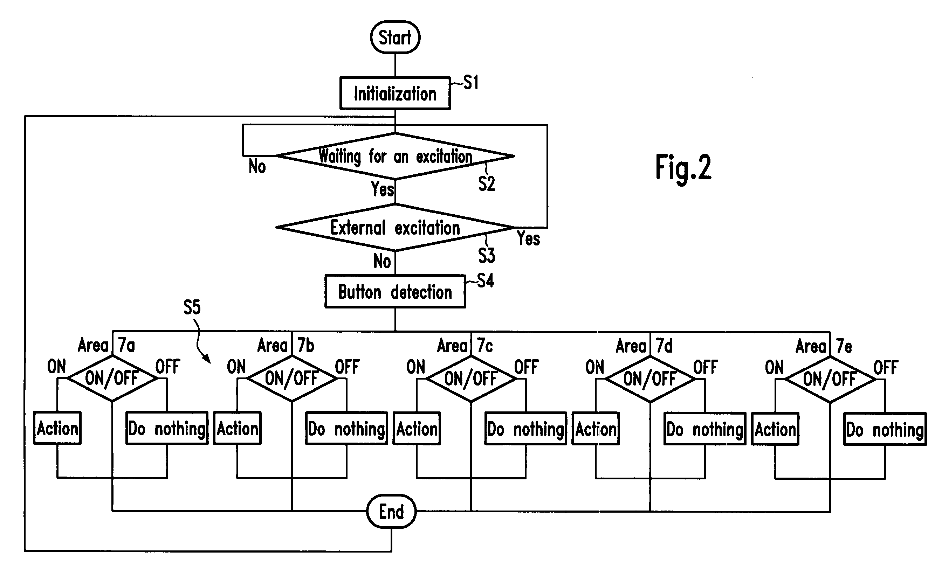

The functionality of the touch control system 1 and, in particular, the configuration of the signal processing means 9 will now be described in detail using Figures 2 - 6. This description corresponds also to one embodiment of the inventive method.

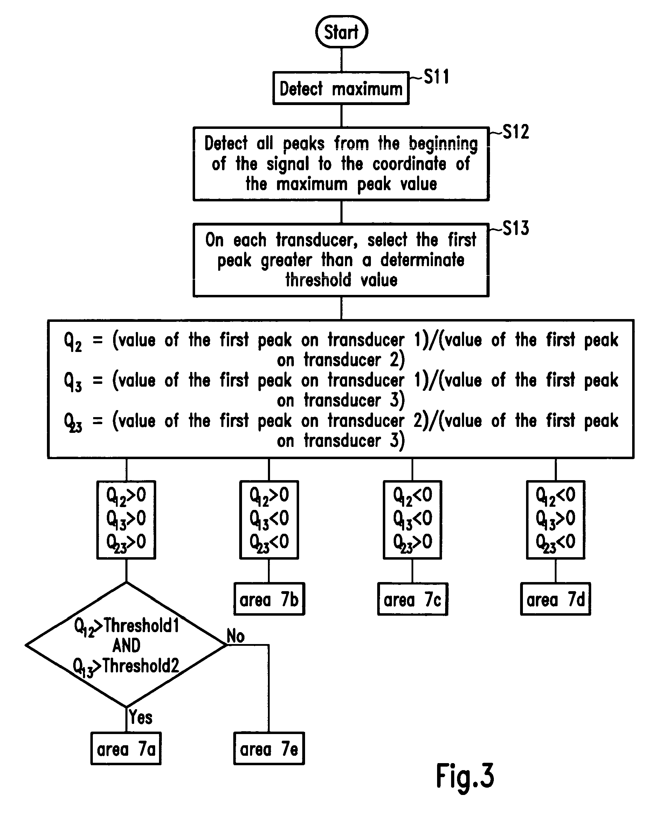

Figure 2 illustrates the overall functioning of the touch control system 1, whereas Figure 3 illustrates in detail how the signal processing means 9 is configured to detect the position at which an excitation occurs on the interaction means 3 based on the relative properties of the signals obtained from the transforming means 5a, 5b and 5c.

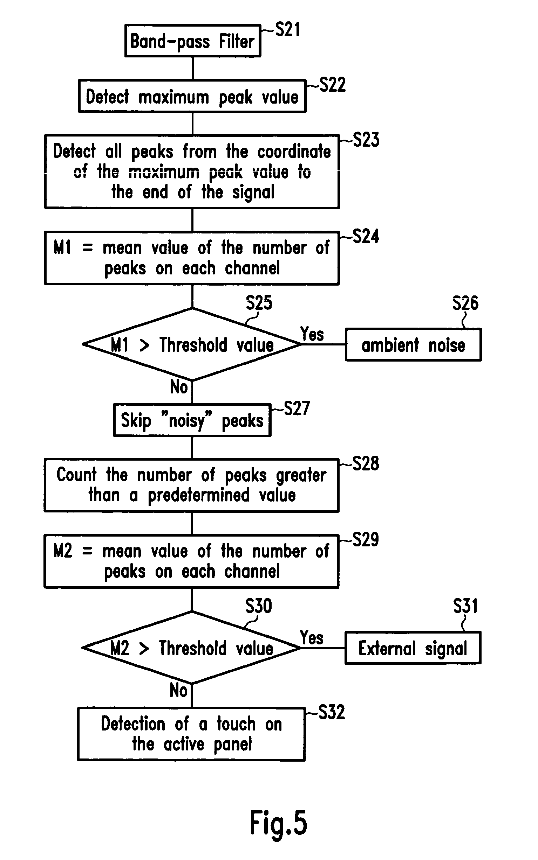

The process illustrated in Figure 2 starts by initialising the touch control system 1 (Step S1), then awaits whether an excitation occurs or not (Step S2). In case an excitation has been recorded, an algorithm is carried out which discriminates actual excitations from noise or external excitations. The functioning of this algorithm will be described with respect to Figure 5 later on (Step S3). In case, an excitation corresponding to an excitation from a user has been detected, the method proceeds with analysing which one of the active areas 7a, 7b, 7c, 7d or 7e has been activated by the user (S4).

In this embodiment, the touch control system 1 is configured such that, upon the detection of an activation of the middle active area 7e, the device or apparatus which is controlled by the touch control system 1 is switched on or off depending on the previous state, and the detection of an excitation on the active areas 7a, 7b, 7c or 7d then leads to the triggering of corresponding actions by the signal processing means 9 (Step S5).

Steps S2 - S5 are then repeated again.

Figure 3 illustrates in detail how the signal processing means 9 determines the position on the interaction means 3 where an excitation occurred, thus describes in detail step S4 of Figure 2. The described algorithm represents only one possible way to determine the position of an excitation, which is based on the exploitation of the sign of the amplitude ratios of the signals obtained from the transforming means 5a, 5b and 5c and their absolute amplitude. According to other embodiments, it is nevertheless possible to carry out a similar analysis based on other properties of the signals, such as time duration of the signals, their frequency spectra and/or the time of light of the various peaks on the different interaction means. In case the system 1 comprises more active areas with the same number of transforming means, it might become necessary to determine signatures with more parameters compared to this embodiment.

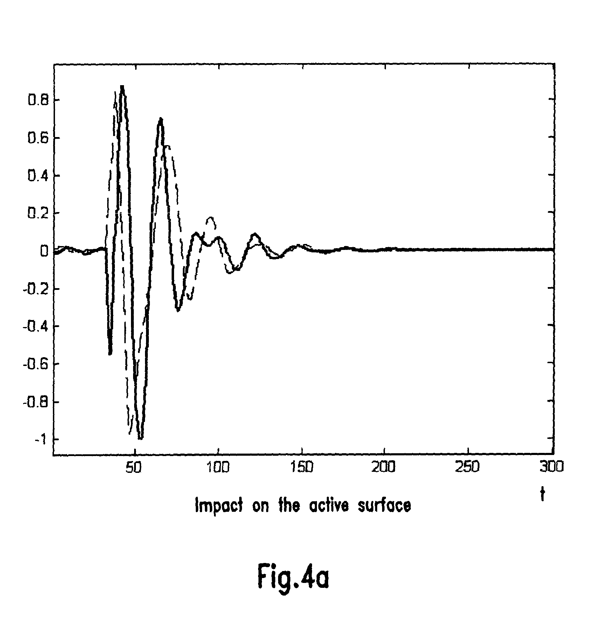

The algorithm starts with detecting the maximum peak in the signal of each transforming means 5a, 5b, 5c. Figure 4A illustrates two typical signals obtained from two different strain gauges put underneath an interaction means 3. In fact, Figure 4A illustrates the pressure change at the transforming means as a function of time, wherein positive values correspond to pressure and negative values to suction at this position on the interaction means. According to Step S11, the maximum peak is detected. Here the maximum peak can be one of the maximum peaks in absolute values, the positive maximum or the negative maximum, as both positive and negative maxima occur approximately at the same time. Step S12 consists in detecting all the peaks in the signal from the beginning of the signal to the coordinate in time of the maximum peak value.

On each transforming means 5a, 5b, 5c, the first peak being greater than a certain predetermined threshold value is then selected (Step S13). It appears that here best results are achieved for absolute values. Starting from the values of the amplitude of the first peak greater than the threshold value, the signal processing means 9 then calculates for each transforming means 5a, 5b, 5c the values
Q12 = (value of the first peak on transforming means 5a)/(value of the first peak on transforming means 5b),
Q13 = (value of the first peak on transforming means 5a)/(value of the first peak on transforming means 5c), and
Q23 = (value of the first peak of transforming means 5b)/(value of the first peak on transforming means 5c).

The left hand side of Table 1 illustrates the response of the transforming means 5a, 5b, 5c in the configuration of Figures 1A and 1B when pressure is detected on the active area 7a, 7b, 7c, 7d, and 7e, and the sign of the ratios Q12, Q13, and Q23. Here a positive value corresponds to pressure and a negative value to suction. "++" signifies a high pressure, "+" corresponds to a lower pressure, and "-" to suction. The amplitudes and the signs are a consequence of the deformation sensed by the transforming means 13 following the excitation, as illustrated in Figure 4a, and are achieved independently whether the interaction means 3 is rigid or soft

The right hand side of Table 1 indicates the signs of the ratios Q12, Q13 and Q23 and it can be seen that, by simply looking at the sign of these ratios, thus a relative property of the signs, it is possible to unambiguously determine the position of an excitation on the active areas 7b, 7c and 7d. To lever the uncertainty about an excitation on active areas 7a and 7e, due to the fact that for these two active areas the signs are the same, the signal processing means 9 is furthermore configured to also look at a second parameter, namely the value of the ratios Q12 and Q13. In case of an excitation on active area 7a, the voltage value on the transforming means 5a will be higher than in the case of an excitation of the active area 7e. Thus, the ratio Q12 and Q13 will have a higher value for active area 7a than for active area 7e.

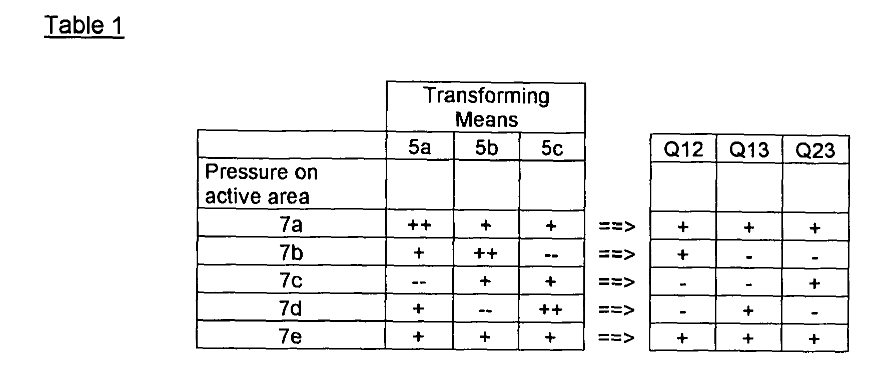

Thus, based on the comparison of the parameter amplitudes and by forming the ratios Q12, Q13 and Q23, the signal processing means 9 can determine signatures, which characterise the various active areas 7a, 7b, 7c, 7d, and 7e. The signature is thus a set of relative parameters of the signals used to characterise the position on the excitation. The signatures corresponding to each one of the active areas 7a, 7b, 7c, 7d, 7e are illustrated in Step S15 in Figure 3. Thus, in case all ratios have a positive sign and Q12 as well as Q13 are higher than certain threshold values, active area 7a receives an excitation from a user. If this is not the case, active area 7e was activated. In case Q12 is larger than zero and Q13 and Q23 smaller than zero, active area 7b was activated. In case Q12 and Q13 were smaller than zero and Q23 was positive, it can be concluded that active area 7c was activated. Finally, in case that Q12 and Q23 were negative and Q13 positive, active area 7d was activated.

The described algorithm is optimal for the configuration illustrated in Figures 1A and 1B, but it can be generalised to any other configuration by adapting the various parameters, for example, by adding an additional relative parameter. In general, it is thus possible to obtain unambiguous signatures for configurations with n transducers for m active areas. Once the active area where an excitation occurred has been identified by the signal processing means 9 (Step S4 in Figure 2), the corresponding action can be triggered (Step S5 in Figure 2).

It is interesting and important to mention that the touch control system 1 according to this invention actually does not look for an exact coordinate of the excitation but enables the identification of the area where the excitation occurred by discriminating it from a series of global positions, based on the signature of the corresponding active area. This is in contrast to the prior art devices which locate a precise position. In fact, as long as the properties of the signals are such that it is possible to discriminate between the active areas, it is also possible to attribute an excitation occurring between one of the areas 7a, 7b, 7c, 7d, 7e where an excitation occurred to one of these areas. In case of an ambiguous excitation, the system can be configured to output an error message without attributing the excitation to one of the areas.

The way the signal processing means 9 is configured to determine the position where the interaction occurred and, thus, also the way the method according to the invention functions has the following advantages:
As the localisation is based on determining relative properties of the measured signals, the analysis is simple compared to cases where absolute values are compared to predetermined signals. In addition, there is no need for calibration, like mentioned above. Furthermore the analysis is independent of the material used.

Due to the use of signatures, it is also possible to render any suitable surface into a touch control system by providing the at least two transforming means and the signal processing means under the surface. Due to the use of strain gauges, actually any material can be used. Finally, there is no limitation to the kind of interaction between the user and the system 1, as a finger, a gloved finger, fingernails, a stylus etc can be used. There is, for example, no need for an electric conductibility.

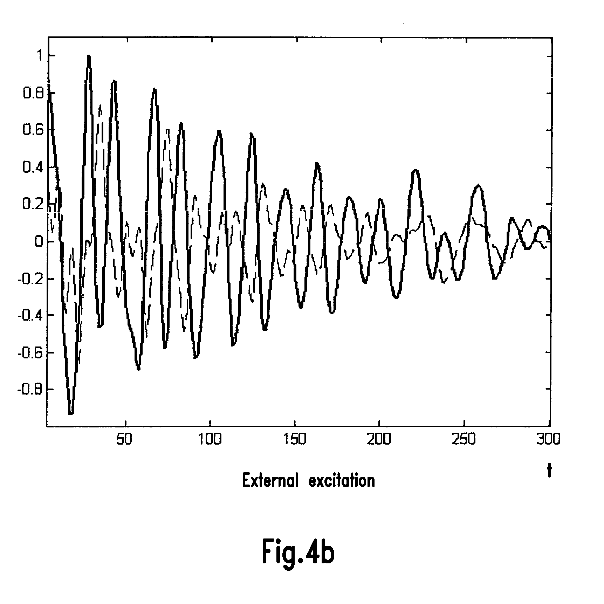

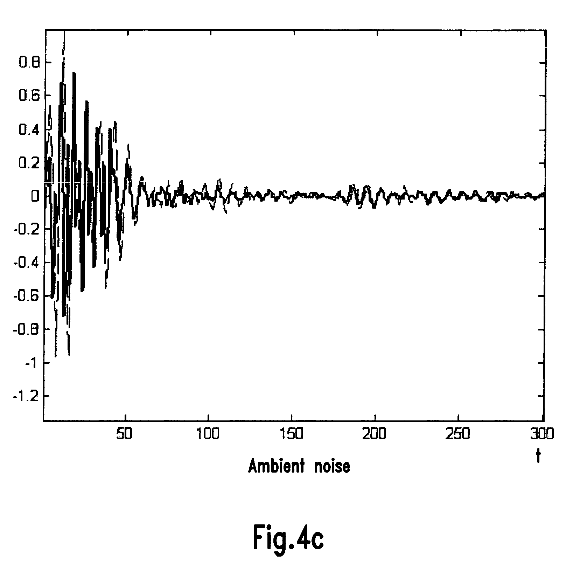

To further improve the signal analysis and thus the touch control system 1 of Figures 1A and 1B, a further signal analysis can be carried out prior to carrying out the method as described with respect to Figure 3 according to a further embodiment of the application. The object of the additional signal analysis, illustrated by the block diagram of Figure 5, is to remove unwanted signals, such as external excitations and noise (see Figure 4B and 4C). First of all (Step 21), the signal received from the transforming means 5a, 5b, 5c is filtered using a band pass filter. Preferably a band pass filter going from 100 - 1000 Hz is used, so that 50 Hz noise from a power supply can be removed and high frequencies, which might be due to an acoustic propagation, are attenuated.

The method to detect whether the signal is due to an external excitation or noise (Figure 4B and 4C) and not due to a wanted intentional excitation (Figure 4A) by a user is based on the finding that external excitations and ambient noise have higher frequencies than the signal one wants to detect. In this context the term external excitation relates to signals, which can arise either by aerial noise, in particular acoustic signals in the air surrounding the system, or by impacts on the system but outside the interaction means, e.g. vibrations arising from the environment of the system.

As the pressure applied by a wanted excitation also has a certain frequency spectrum which is not fixed to a certain frequency, it is not possible to use filters with a very low pass band, as this would also attenuate the pressure information which one wants to analyse later on. Nevertheless, it is still possible to discriminate the different kinds of signals.

Figure 4B illustrates typical ambient noise also as a function of time obtained from the two different strain gauges. Compared to Figure 4A, it can be seen that a number of peaks can be determined over the entire timeframe which is not the case in Figure 4A. In practice, the signal processing means 9 is configured to detect the maximum peak value and then, starting from the time coordinate of the maximum value, all peaks (positive and negative) are detected and their number is counted (Step 23). Then, in Step S24, the mean number of peaks for each transforming means is determined. In case that this mean value exceeds a certain threshold (S25), it is considered that the signal represents noise and is removed and not considered anymore (Step S26). The noisy signals are then skipped (Step S27).

In the next steps, one discriminates between external excitation type signals (Figure 4C) and excitation on active area type interactions (Figure 4A). Here the discriminating feature is the fact that the real excitation decreases much faster than the unwanted signals (see Figure 4A and 4C).

According to the method, the data processing means 9 counts the number of peaks (S28) exceeding a predetermined value and calculates (Step 29) for each signal of the transforming means 5a, 5b, 5c, the mean value of the number of peaks exceeding that predetermined value for each transformation means. In case this second mean value is higher than a second threshold value (S30), it is decided that an external signal is present. If this is not the case, it is decided that an active area 7a, 7b, 7c, 7d, 7e has been touched on the interaction means 3. This excitation is then analysed according to the method described with respect to Figure 3.

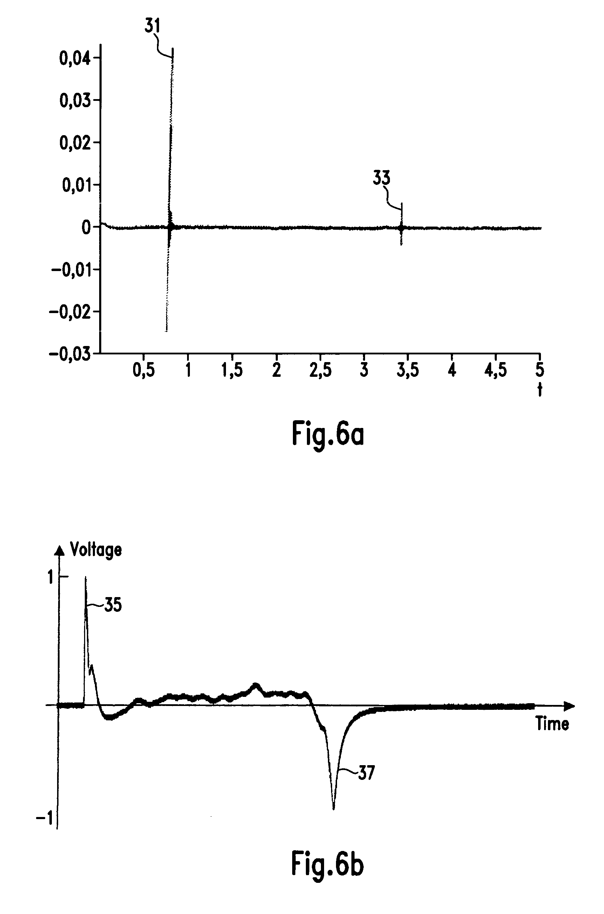

Figures 6A to 6C illustrate further types of signals which can be exploited by the touch control system to trigger corresponding actions. In fact, the excitation might not just be a punctual event like illustrated in Figure 4A but, the touch control system 1, as illustrated in Figures 1A and 1B, is also able to detect the end of a continuous excitation by detecting the lift-off of the finger (or any other object creating the excitation) from the interaction means 3. This is due to the fact that, again, pressure changes are observed.

Such a scenario is illustrated in Figure 6A, illustrating a signal as a function of time, where the first signal 31 is attributed to the first contact occurring at a first instant and the second smaller signal 33 corresponds to the lift-off at a second instant. By comparing the signal at the first and second instants with each other, it is possible to see which one corresponds to a first contact and which one to the lift-off. By each time determining the signatures, like described with respect to Figure 3, it is possible to identify where the first contact and where the lift-off occurred on the interaction means. Accordingly, at the first contact instant and at the lift-off instant, it is possible to configure the signal processing means such that, for each type of excitation, a different action is triggered.

As an alternative, the signal processing means could also be configured to determine the duration from the first to the second instant and to trigger different actions as a function of that duration. Furthermore, when the position at which the first contact occurred and the position where lift-off occurred is not the same, this can also be exploited to trigger corresponding actions.

Figure 6B illustrates a second example of such a signal. Again the fist signal 35 corresponds to the first contact and the second smaller one 37 to the lift-off. This example also shows that in between the two signals 35 and 37 micro vibrations are observed. Thus also this part of the signal could be exploited by the signal processing means 9.

A particular case is the sliding of a finger or any other interacting object on the interaction means 3, which can also be detected by a touch control system 1 as illustrated in Figures 1A and 1B. Such a sliding excitation generates pressure differences against time on the various transforming means 5a, 5b, 5c which again can be exploited to determine the direction of the sliding.

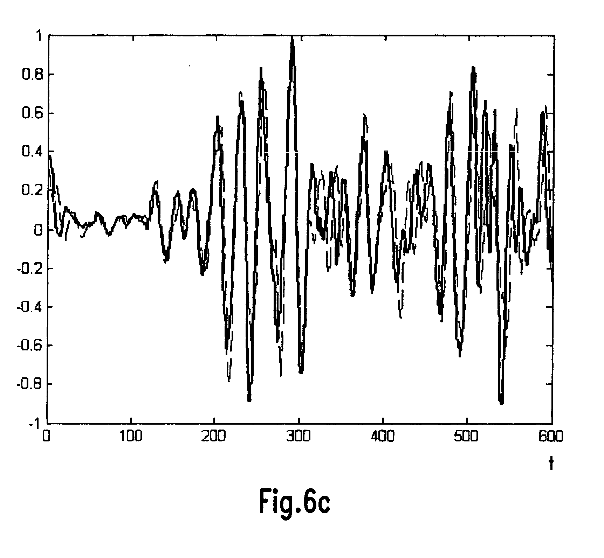

Figure 6C illustrates such a signal. The implementation of such a sliding detection can be used to trigger the actions attributed to the active areas 7a, 7b, 7c, 7d, 7e which are on the trajectory of the sliding action but it could also be possible to compare the signatures with the pre-calibrated ones to raise the precision of the localisation of the excitation. Such a sliding interaction can be detected in a one or two axis coordinate system depending on the number of transformation means that are used.

As a further variant, the touch control system 1 can be used as a multi-touch application capable of handling cases where various active areas 7a, 7b, 7c, 7d, 7e are excited at the same time. In such a case, the system could also have a signature storing means to store predetermined signatures. To identify the different areas, the measured signature can be compared with a combination of predetermined signatures. As a further variant, the touch control system 1 can be configured such that multi-touch sliding applications can be identified by the touch control system 1.

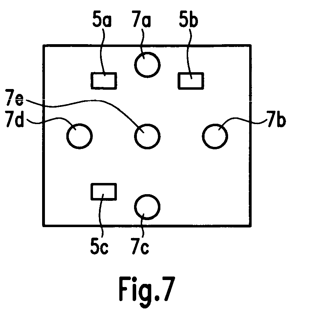

Figure 7 illustrates the impact of the positioning of the transforming means 5a, 5b, 5c with respect to the various active areas 7a - 7e. Features in this second embodiment of the invention having the same reference numeral as already used in Figure 1 a and 1 b with respect to the first embodiment are not repeated again, but their description is incorporated herewith by reference. In this embodiment the positioning of the transforming means has been changed. They have been moved further to the corners of the interaction plate 3. In this configuration, impacts on the five active regions 7a-7e lead to the following signs of the sensed amplitudes (Table 2):

**Table 2:**

| | 5a | 5b | 5c |
|---|---|---|---|
| 7a | + | + | - |
| 7b | - | + | - |
| 7c | - | - | + |
| 7d | + | - | + |
| 7e | + | + | + |

As can be seen from Table 2, simply comparing the sign of the amplitudes (again "+" corresponds to pressure and "-" to suction) as the one parameter of the signals sensed by the transforming means is sufficient to unambiguously determine the signature corresponding to the location of an impact on one of the five active areas.

Actually, by especially positioning the available transforming means with respect to the number of active areas one needs for a certain application, it becomes possible to limit the amount of different parameters one has to look at to a minimum. In the second embodiment the positioning is such that only one parameter - the sign of the amplitude - needs to be compared to get the necessary data.

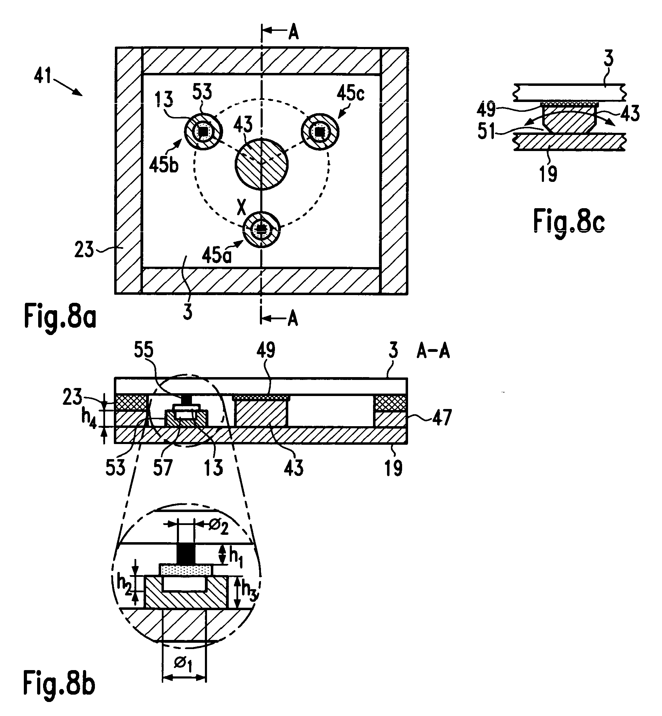

Figures 8a and 8b illustrate a third embodiment of the invention. Figure 8a is a schematic top view and Figure 8b a schematic side cut view of the touch control system 41 of the third embodiment. The main difference between the touch control system 41 of the third embodiment compared to the touch control system 1 of the fist embodiment is the presence of a pivot means 43 positioned between the three interaction means 45a, 45b, 45c. Features of the touch control system 41 with the same reference numerals as already used in the first embodiment illustrated in Figure 1 a and 1 b are not described in detail again, but their description is incorporated herewith by reference.

In the third embodiment the interaction means 45a, 45b, 45c, as well as the pivot means 43 are arranged on a lower panel 19, as in the first embodiment. However, in this embodiment, the upper panel 21 has been omitted. Of course, according to a variant, this embodiment could also comprise an upper panel. The lower panel 19 comprises an upwards-protruding edge 47, preferably around the entire edge region of the lower panel 19. The lower panel 19 and the upwards-protruding edge 47 can be made out of one piece or out of separate pieces. The upwards-protruding edge is preferably of the same material as the lower panel 19 and thus rigid. Limber sidewalls 23 are provided between the upwards-protruding edge 47 and the interaction plate 3.

The pivot means 43 is preferably made out of a rigid material and in contact with the interaction plate 3, directly or via a gasket or adhesive 49. The pivot means 43 can have any shape, but is preferably of cylindrical shape. In this embodiment, the pivot means 43 is positioned in the centre of an imaginary circle (dotted lines) on the periphery of which are arranged the three interaction means 45a, 45b, 45c. For this arrangement, it is easiest to analyse the relative properties of the sensed parameters. However, the invention is not limited to this precise positioning and deviations from the central position are possible. Furthermore, lower panel 19 and pivot means 43 can form a single piece or be build up from two separate pieces.

The role of the pivot means 43 is to amplify the movement of the interaction plate 3 relative to the interaction means 45a, 45b and 45c and thus to provide an amplification effect. Indeed, when e.g. providing an impact on position x of the interaction plate 3, the interaction plate 3 will tilt around the pivot means 43. Therefore, interaction means 45a will sense a relative large pressure value, whereas suction is detected by interaction means 45. Thus, the analysis of the amplitude ratios and/or sign of the amplitude ratios or other parameters is facilitated. As a consequence, it becomes easier to determine the signature corresponding to the position on the interaction means 3 where an impact occurred.

To facilitate the tilt movement, the pivot means 43 may have undercut regions 51 around its periphery, as illustrated in Figure 8c. These undercut regions 51 are preferably close to or at the interface of the lower panel 19 and facilitate the tilt movement of the interaction plate together with the gasket 49 (if present).

A second difference between the first and second embodiment relates to the mounting of the interaction means 45a, 45b, 45c. In this embodiment the interaction means 45a, 45b and 45c comprise a transducer 13 mounted on a support 53 (rigid or elastic). The support 53 protects the transducer 13 to prevent damage. Furthermore, a rigid transmission means 55 is provided between the transducer 13 and the interaction means 3. The transmission means 55 transmits the signal, which occurred as a consequence of an excitation, e.g. at position x, onto the transducer 13.

The height h of the rigid transmission means 55 is preferably chosen such that, even in the absence of any excitation, the transducer 13 senses a signal (e.g. corresponding to a positive pressure), corresponding to a kind of biasing. In this case, it is not mandatory to fix, e.g. using an adhesive, the rigid transmission means 55 to the interaction plate 3, which facilitates the assembly of the total system 41. Actually, suction - corresponding to a moving away from the interaction means 3 with respect to one of the transducers 13 - can then still be measured, namely when the measured signal is smaller than the one in the absence of an excitation.

The elasticity of the support 53 is lower than the one of the limber sidewalls 23, such that, upon an excitation, the sidewalls 23 compress or extend more compared to the support 53. The support 53 can have a recessed portion 57 (in dotted lines) underneath the transducer 13 with cross section ∅1 and height h2. The cross section ∅1 of this recessed portion 57 corresponds at least to cross-section 02 of the transmission means 55, but is preferably larger. Eventually, the recess portion 57 can be chosen such that a ring shaped support 55 is formed. It appears that, for a ring shaped support 55, an increased sensitivity is observed which is attributed to an increase in bending of the transducer 13. A further improved signal quality is achieved when the height h3 of the support 53 corresponds to the height h4 of the protruding edge 47.

The invention is not limited to the presence of a pivot means 43 in combination with limber sidewalls 23 according to the second embodiment or to the presence of limber sidewalls 23. It is also possible, according to a further variant, to omit the limber sidewalls 23 and to only have a pivot means 43.

The various features and variants of this embodiment can be combined with the various features and variants of the first embodiment either individually or in combination to form further embodiments according to the invention. The embodiments described above, and dealing with the inventive methods, can also be carried out using the touch control system 41 of the second embodiment.

The invention can find its application in various devices and apparatus, such as variators, to e.g. control light or temperature, but also in machine control applications, such as electrical stores, or to control the height of a tool. It could also be used as a mouse control device in a computer which is an example of a two axis application of the sliding excitation analysis. As a general application, the touch control system can be used anywhere where switches are necessary.

A simpler touch control system, configured for only one active area, can take advantage of the same kind of analysis as explained above concerning the discrimination between noise, external impacts and a wanted excitation, using only one transforming means. In this case the absolute value of the signal is used as no relative properties of the signal can be determined.

## Claims

1. Touch control system comprising:
a) an interaction means (3) between a user and the system,
b) at least two transforming means (5a, 5b, 5c), in particular comprising a transducer (13), preferably a strain gauge or a piezoelectric transducer, for transforming a mechanical, in particular pressure, excitation of the interaction means (3) into respective signals, and
c) a signal processing means (9) configured to determine a signature based on a comparison of at least one parameter of the respective signals, wherein the signature characterizes the position on the interaction means (3) where the excitation occurred.

2. Touch control system according to claim 1, wherein the signal processing means (9) is configured to determine the signature based on relative properties of at least one parameter of the respective signals, in particular their amplitude ratios and/or the sign of the amplitude ratio and/or the time duration and/or their frequency spectra.

3. Touch control system according to claim 2, wherein the at least two transforming means (5a, 5b, 5c) are incorporated in at least one housing (17) with limber sidewalls (23).

4. Touch control system comprising:
a) an interaction means (3) between a user and the system,
b) at least two transforming means (5a, 5b, 5c), in particular comprising a transducer (13), preferably a strain gauge or a piezoelectric transducer, for transforming an mechanical excitation, in particular a pressure excitation, of the interaction means (3) into respective signals, such transforming means being incorporated in at least one housing (17) with limber sidewalls (23).

5. Touch control system according to one of claims 1 to 4, wherein at least one transforming means (5a, 5b, 5c) is arranged on the side of the interaction means (3) being opposite to the side (11) of the interaction means (3) being arranged towards a user.

6. Touch control system according to one of claims 1 to 5, wherein the interaction means (3) comprises a plurality of active areas (7a, 7b, 7c, 7d, 7e) and the signal processing means (9) is configured to trigger a predetermined action upon excitation of the corresponding active area (7a, 7b, 7c, 7d, 7e) based on the identification of a corresponding signature by the signal processing means (9)and wherein the transforming means (5a, 5b, 5c) are arranged such that unambiguous signatures are obtained, in particular based on one parameter of the respective signals only.

7. Touch control system according to one of claims 1 to 6, wherein the signal processing means (9) is further configured to determine a first signature corresponding to a first contact with the interaction means (3) at a first instant and to determine a second signature corresponding to a lift-off from the interaction means (3) at a second instant based on characteristic differences in first contact and lift-off signals. Nur auf lift-off.

8. Touch control system according to claim 7, wherein the signal processing means (9) is further configured to determine the duration from the first to the second instant and to trigger different actions as a function of the duration.

9. Touch control system according to one of claims 7 or 8, wherein the signal processing means (9) is further configured to analyse the signature as a function of time, and to identify the trajectory of the excitation on the interaction means (3), in particular in a one or two dimensional coordinate system, based on characteristic differences in the signals depending on the direction of the trajectory relative to the at least two transforming means (5a, 5b, 5c).

10. Touch control system according to one of claims 6 to 9, wherein the signal processing means (9) is furthermore configured to trigger a plurality of respective actions in case that an excitation of a plurality of corresponding active areas (7a, 7b, 7c, 7d, 7e) occurred essentially at the same time, wherein the triggering is based on comparing the determined signature with a superposition on predetermined signatures.

11. Touch control system according to one of claims 1 to 10, wherein the interaction means (3) is a rigid or soft panel comprising at least one of leather, latex, silicone, plastic, glass, metal and wood.

12. Touch control system according to one of claims 1 to 11, further comprising a pivot means (43) arranged between the at least two transforming means (5a, 5b, 5c, 45a, 45b, 45c).

13. Touch control system, in particular according to one of claims 1 to 12, comprising:
- an interaction means (3) between a user and the system,
- at least two transforming means (5a, 5b, 5c), in particular comprising a transducer (13), preferably a strain gauge or a piezoelectric transducer, for transforming an mechanical excitation, in particular a pressure excitation, of the interaction means (3) into respective signals, wherein the at least two transforming means and the interaction means are arranged such that upon mechanical excitation a relative movement between the at least two transforming means and the interaction means is observable.

14. Apparatus comprising a touch control system according to one of claims 1 to 13.

15. Method for localising an excitation of an interaction means between a user and a touch control system, comprising the steps of:
a) transforming a mechanical excitation, in particular a pressure excitation, applied on an interaction means into respective signals using at least two transforming means, and
b) determining a signature based on a comparison of at least one parameter of the respective signals, wherein the signature is a characteristic of the position on the interaction means where the excitation occurred.

16. Method according to claim 15, wherein the signature is determined based on relative properties of the at least one parameter of the respective signals, in particular their amplitude ratios and/or the sign of the amplitude ratios and/or the time duration and/or their frequency spectra.

17. Method according to one of claims 15 to 16, further comprising determining a first signature corresponding to a first contact with the interaction means at a first instant and determining a second signature corresponding to a lift-off from the interaction means at a second instant based on characteristic differences in first contact and lift-off signals.

18. Method according to claim 17, further comprising determining the duration from the first to the second instant and triggering different actions as a function of the duration.

19. Method according to one of claims 17 to 18, further comprising analysing the signature as a function of time, and identifying the trajectory of the excitation on the interaction means, in particular in a one or two dimensional coordinate system, based on characteristic differences in the signals depending on the direction of the trajectory relative to the at least two transforming means.

20. Method according to one of claim 15 to 19, further comprising the step of triggering a plurality of respective actions in case that an excitation of a plurality of corresponding active areas occurred essentially at the same time, wherein the triggering is based on comparing the determined signature with a superposition on predetermined signatures.

21. Method according to one of claims 15 to 20, further comprising a step d) of discriminating an excitation from noise based on the number of peaks in the signals over a predetermined time interval.

22. Method according to one of claims 15 to 21, further comprising a step e) of discriminating an excitation from an external excitation based on the decay of the signal after the maximum pressure amplitude.

23. Computer program product, comprising one or more computer readable media having computer-executable instructions for performing the steps of the method according to one of the Claims 15 - 22.
